# EUROPEAN PATENT APPLICATION

(11) **EP 1 927 944 A2**
(43) Date of publication of application: **04.06.2008**
(21) Application number: 07022750.9
(22) Date of filing: 23.11.2007
(51) Int. Cl.: G06Q 30/00

(54) **Electronic money settlement method and system and terminal and tangible medium**

(30) Priority: 29.11.2006 JP 2006321504
(71) Applicant: Brother Kogyo Kabushiki Kaisha, Nagoya-shi, Aichi-ken 467-8561 (JP)
(72) Inventor: Imagawa, Kayo Brother Kogyo Kabushiki Kaisha, Nagoya-shi Aichi-ken 467-8562 (JP)
(74) Representative: Hofer, Dorothea

(57) **Abstract**

A settlement environment is described. A POS device (4) reads a barcode of an item to be bought by a user (S1), and the POS device (4) identifies plural electronic money settlement devices embedded in a cell-phone 2 (S4), and the POS device (4) compares predetermined discounted settlement value of identified plural electronic money settlement devices, and the POS device (4) selects the electronic money settlement device of the cheapest discounted settlement value (S8), and then a settlement is made with the use of the selected electronic money settlement device (S103).

## Description

### CROSS-REFERENCE TO RELATED APPLICATIONS

The present application claims priority from Japanese Patent Application No. 2006-321504, which was filed on November 29, 2006, the invention of which is herein incorporated by reference in its entirety.

### BACKGROUND OF THE INVENTION

### 1. Field of the Invention

One or more aspects of the present invention relate to an electronic money settlement method, an electronic money settlement system, an electronic money settlement terminal, and a tangible computer-executable medium that make a settlement with the use of an electronic money settlement device included in a electronic money card, a cell-phone, or the like, and more particularly that select the electronic money settlement device, in which settlement value is the cheapest, among plural electronic money settlement devices.

### 2. Description of Related Art

Conventionally, settlement process systems are known. In the settlement systems, predetermined electronic information is stored in IC cards, credit cards, debit cards, super cards, cell-phones, or the like with individual information. By exchanging the stored electronic information, settlements are made. That is, the electronic information is used as alternatives to actual money. Also, it is noted that plural electronic money settlement devices, in which the electronic money information is stored in memory beforehand and the stored electronic money information is used when the settlement is made, are used. Here, the electronic money settlement device includes Edy (registered trademark in Japan), Suica (registered trademark in Japan), or the like.

On the other hand, portable terminals such as cell-phones are used for various purposes, for example, from verbal communication to information communication (including send/receive of message, web browser of Internet, or the like). Also, recently, penetration rate of the portable terminals are very high, and a user commonly always carries the portable terminal. It is proposed that the portable terminal has above function of the electronic money settlement and electronic settlement can be made without the cards or the like. Also, plural programs are installed in the portable terminal and plural electronic money settlement devices can be embedded in one portable terminal.

For example, in conventional example, information to be used for settlement with the credit cards, the debit cards, and electronic money is stored in an IC chip embedded in the cell-phone, settlement device to be used is selected based on settlement value and the settlement is made with the selected settlement device.

Here, in the some electronic money settlement with the use of each of the electronic money information, when the settlement is made with the use of the electronic money information, service in which a predetermined portion of settlement value is discounted is provided. The user usually wants to make the settlement with use of the electronic money of the cheapest electronic money information. However, in above electronic money settlement method, discounted value is not unconsidered, to make the settlement with the use of the cheapest electronic money information, the user has to compare discounted settlement value by oneself, and has to select the electronic money information to be used.

### SUMMARY OF THE INVENTION

One or more aspects of the present invention has been made in view of the above circumstances and has an object to overcome the above problems and to provide an electronic money settlement method, and an electronic money settlement system, an electronic money settlement terminal, and a computer readable medium having computer-executable instructions or the like in which a user needs not compare discounted settlement value of each of electronic money settlement devices by oneself when the electronic money settlement device to be used for a settlement is selected, the settlement can be quickly made, and convenience of the user is improved.

To achieve the above object, according to a first aspect of the invention, there is provided an electronic money settlement method comprising: a settlement value obtaining step that obtains a settlement value; a settlement device identifying step that identifies plural electronic money settlement devices (2); a value comparing step that compares discounted settlement values corresponding to the identified electronic money settlement device (2) based on discount information in each of which a discount rate of the settlement value corresponds to the electronic money settlement device (2); a settlement device selecting step that selects a specific electronic money settlement device (2) corresponding to the cheapest discounted settlement value based on a result of the value comparing step; and a making payment step that makes a settlement of the cheapest discounted settlement value with the use of the selected electronic money settlement device (2).

In the above electronic money settlement method, the electronic money settlement device of the cheapest discounted settlement value is selected among identified electronic money settlement devices, and a settlement is made with the use of selected electronic money settlement.

Accordingly, in the first aspects of the invention, the user needs not compare discounted settlement value of each of electronic money settlement device by oneself and a settlement can be quickly made. Also, in the first aspects of the invention, the convenience of the user will be improved.

And, according to a second aspect of the invention, there is also provided an electronic money settlement system comprising: plural electronic money settlement devices (2), each of the electronic money settlement devices (2) stores electronic money information; and a settlement terminal device (4,5) that makes a settlement for an item by reading the electronic money information stored in the electronic money settlement device, wherein the settlement terminal device (4,5) further comprises: a settlement value obtaining device (4) that obtains a settlement value; a settlement device identifying device (4) that identifies plural electronic money settlement devices (2); an information storage device (52) stores discount information in each of which a discount rate of the settlement value corresponding to the electronic money settlement device (2); a value comparing device (4) that compares discounted settlement values corresponding to the identified electronic money settlement device (2) based on the discount information; a settlement device selecting device (4) that selects a specific electronic money settlement device corresponding to the cheapest discounted settlement value; and a making settlement device (4) that makes a settlement of the cheapest discounted settlement value with the use of the selected electronic money settlement device.

In the above electronic money settlement system, the electronic money settlement device of the cheapest discounted settlement value is selected among identified electronic money settlement devices, and a settlement is made with the use of selected electronic money settlement.

Accordingly, in the second aspects of the invention, the user needs not compare discounted settlement value of each of electronic money settlement device by oneself and a settlement can be quickly made. Also, in the first aspects of the invention, the convenience of the user will be improved.

And, according to a third aspect of the invention, there is also provided an electronic money settlement terminal device (4,5) comprising: a processor programmed to: (a) obtain a settlement value; (b) identify plural electronic money settlement devices (2); (c) compare discounted settlement values corresponds to the identified electronic money settlement device (2); (d) select a specific electronic money settlement device (2) corresponding to the cheapest discounted settlement value based on a result of the value comparing step; and (e) make a settlement of the cheapest discounted settlement value with the use of the selected electronic money settlement device.

In the above electronic money settlement terminal device (4,5), the electronic money settlement device of the cheapest discounted settlement value is selected among identified electronic money settlement devices, and a settlement is made with the use of selected electronic money settlement.

Accordingly, in the third aspects of the invention, the user needs not compare discounted settlement value of each of electronic money settlement device by oneself and a settlement can be quickly made. Also, in the first aspects of the invention, the convenience of the user will be improved.

According to a fourth aspect of the invention, there is also provided a tangible computer-executable medium having instructions stored thereon that, when executed by a processor, perform a method comprising the steps of: a settlement value obtaining step that obtains a settlement value; a settlement device identifying step that identifies plural electronic money settlement devices (2); a value comparing step that compares discounted settlement values corresponds to the identified electronic money settlement device (2) based on discount information in each of which a discount rate of the settlement value corresponds to the electronic money settlement device (2); a settlement device selecting step that selects a specific electronic money settlement device (2) corresponding to the cheapest discounted settlement value based on a result of the value comparing step; and a making payment step that makes a settlement of the cheapest discounted settlement value with the use of the selected electronic money settlement device (2).

In the above tangible computer-executable medium, the electronic money settlement device of the cheapest discounted settlement value is selected among identified electronic money settlement devices, and a settlement is made with the use of selected electronic money settlement.

Accordingly, in the fourth aspects of the invention, the user needs not compare discounted settlement value of each of electronic money settlement device by oneself and a settlement can be quickly made. Also, in the first aspects of the invention, the convenience of the user will be improved.

One or more of the above aspects of the invention will be more fully described in the following detailed description when read in connection with the accompanying drawings. It is to be expressly understood, however, that the drawings are for purpose of illustration only and not intended as a definition of the limits of the invention.

Further developments of the invention are given in the dependent claims.

### BRIEF DESCRIPTION OF THE DRAWINGS

The accompanying drawings, which are incorporated in and constitute a part of this specification illustrate embodiments of the invention and, together with the description, serve to explain the objects, advantages and principles of the invention.
Figure 1 is a view of a schematic structure of an electronic money settlement system in accordance with one or more aspects of the present invention;
Figure 2 is a block diagram of the electronic money settlement system in accordance with one or more aspects of the present invention; .
Figure 3 is a view of an example of memory area of electronic money information storage in accordance with one or more aspects of the present invention;
Figure 4 is a view of an example of memory area of electronic money information storage in accordance with one or more aspects of the present invention;
Figure 5 is a view of an example of memory area of electronic money information storage in accordance with one or more aspects of the present invention; and
Figure 6 is a flowchart of an electronic money settlement process program executed in a cell-phone and a POS device in accordance with one or more aspects of the present invention.

### DETAILED DESCRIPTION OF THE PREFERRED EMBODIMENTS

The various aspects summarized previously may be embodied in various forms. The following description shows by way of illustration of various combinations and configurations in which the aspects may be practiced. It is understood that the described aspects and/or embodiments are merely examples, and that other aspects and/or embodiments may be utilized and structural and functional modifications may be made, without departing from the scope of the present invention.

It is noted that various connections are set forth between items in the following description. It is noted that these connections in general and, unless specified otherwise, may be direct or indirect and that this specification is not intended to be limiting in this respect.

Aspects of the invention are described by way of hardware elements. However, it is appreciated that these elements may also be software modules that are executable in a computer. The software modules may be stored on a computer readable medium, including but not limited to a USB drive, CD, DVD, computer-readable memory, tape, diskette, floppy disk, and the like. For instance, aspects of the invention may be embodied in a JAVA-based application or the like that runs in a processor or processors. Further, the terms "CPU" and "processor" are inclusive by nature, including at least one of hardware, software, or firmware. These terms may include a portion of a processing unit in a computer (for instance, in multiple core processing units), multiple cores, a functional processor (as running virtually on at least one of processor or server, which may be local or remote).

It is contemplated that one or more aspects of the invention may be implemented as computer executable instructions on a computer readable medium such as a non-volatile memory, a magnetic or optical disc. Further, one or more aspects of the invention may be implemented with a carrier signal in the form of, for instance, an audio-frequency, radio-frequency, or optical carrier wave.

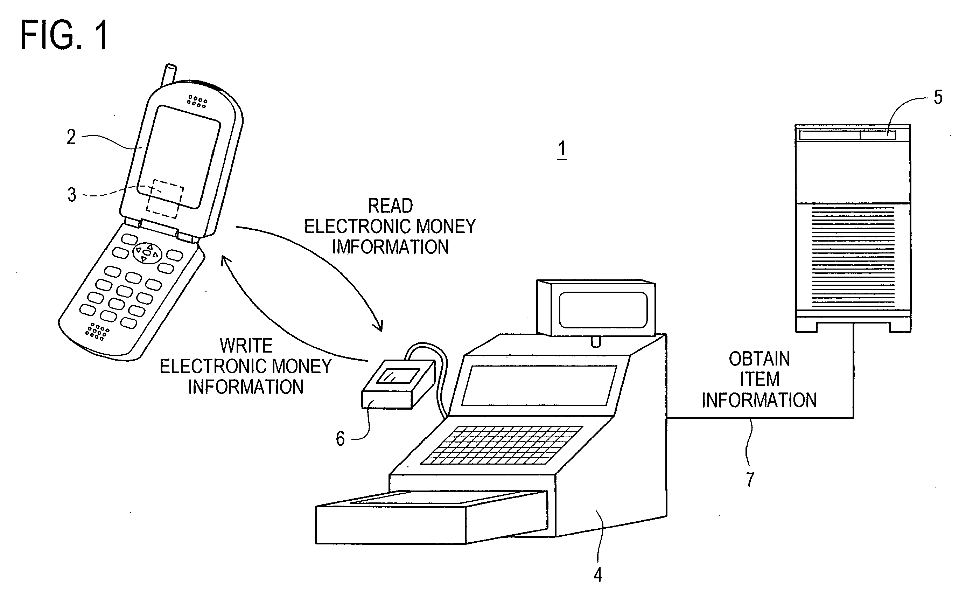

An embodiment embodying the present invention as an electronic money settlement method and an electronic money settlement system will be described in detail with drawings. At first, a simple structure of the electronic money settlement system of the embodiment will be described with reference to Figure 1.

As shown in Figure 1, the electronic money settlement system 1 of the embodiment basically includes a cell-phone 2, a POS (Point of Sales System) device 4, and settlement information DB 5. The cell-phone 2 has plural electronic money settlement device 2. The POS device 4 is located inside a shop (for example, a convenience store). The POS device 4 reads and writes the electronic money information of an IC tag 3 embedded in the cell-phone 2, thereby, the settlement (transaction) is made. Information related to settlement values of items is stored in the settlement information DB 5. The electronic money settlement devices embedded in the cell-phone 2 makes the settlement with the use of the electronic money (for example, Edy (registered trademark in Japan), Suica (registered trademark in Japan), or the like). The electronic money settlement device includes the IC tag 3 which has electronic money information (such as a type of the electronic money, and balance of the electronic money, or the like).

The IC tag 3 is embedded in the cell-phone 2, and includes an IC chip and an antenna.

Each of electronic money information A to C and access key corresponding thereto are stored in the IC chip. Each of the access keys is used for authentication. Each of the electronic money information A to C is used by the electronic money settlement device. The cell-phone 2 and the POS device 4 communicate by wireless via the antenna embedded in the IC tag 3. Here, the IC chip is unexposed on surface.

The POS device 4 includes an IC reader/writer 6. The IC reader/writer 6 communicates with the cell-phone 2 via the antenna by wireless, reads and writes the electronic money information stored in the IC tag 3. The POS device 4 has access keys to authenticate and identify the electronic money information. Each of the access keys is checked the access keys related to the electronic money information stored in the IC tag 3. If access key is authenticated, the electronic money information corresponding to the authenticated access key will be read and written.

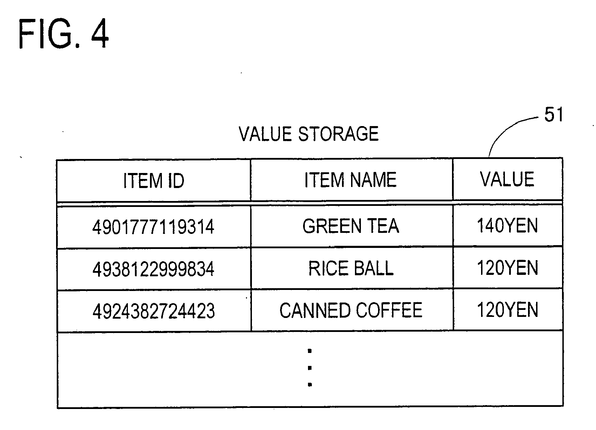

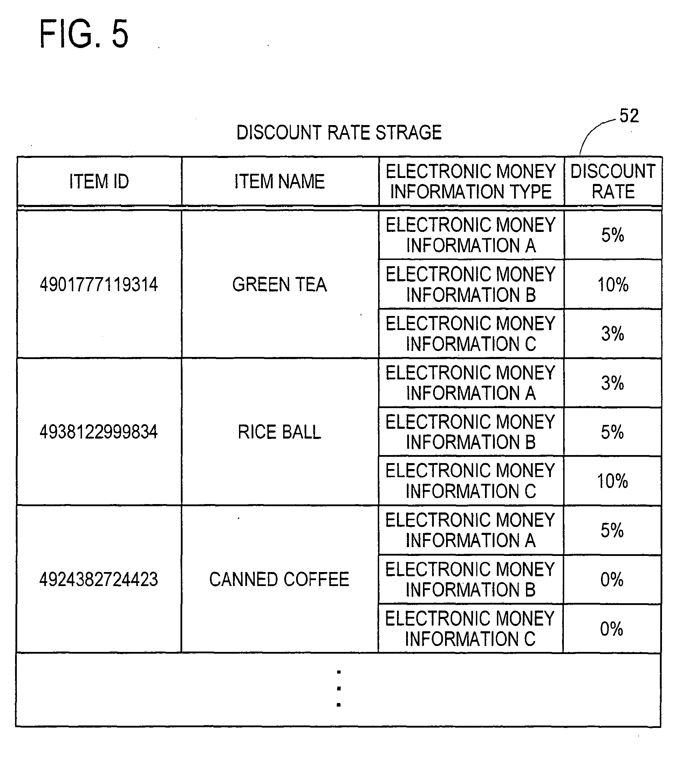

The settlement information DB 5 includes HDD (hard-disk drive) or the like. Item ID, item name, value of each of items to be sold in the shop are stored in the settlement information DB 5 (see Figure 4). Discount information of settlement value of each of the electronic money settlement devices is also stored in the settlement information DB 5 (see Figure 5). The POS device 4 and the settlement information DB 5 two-way communicate via a communication line 7 (for example, LAN, wireless, or the like).

An electronic money settlement method of the electronic money settlement system 1 will be described. At first, a user charges a balance of electronic money information in the IC tag 3 with the use of a special device. And then, when the POS device 4 located at the shops reads a barcode of an item to be bought by the user, the POS device 4 obtains a value of the item (settlement value) and each of discount information of electronic money information from the settlement information DB 5. Next, the user approximates the cell-phone 2 within a predetermined distance from the IC reader/writer 6. Thereby, the POS device 4 automatically selects the electronic money settlement device, in which discounted settlement value of the item is the cheapest, among electronic money settlement devices included in the cell-phone 2. And then, the discounted settlement value is subtracted from the balance of the electronic money information of the selected electronic money settlement device, and the balance of the electronic money information will be updated to the subtracted value. As mentioned above, the settlement of the item is completed.

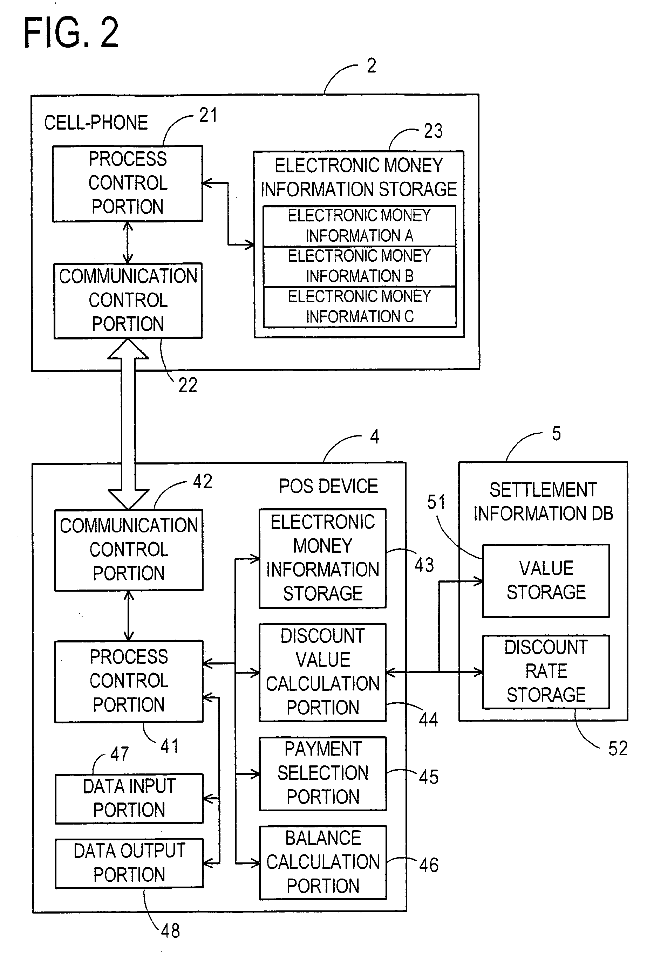

A functional block diagram of the electronic money settlement system 1 will be described with reference to Figure 2.

At first, the cell-phone 2 making up the electronic money settlement system 1 will be described. As shown in Figure 2, the cell-phone 2 includes a process control portion 21, a communication control portion 22, electronic money information storage 23, or the like. A central processing unit (CPU) embedded in the cell-phone 2 may function as the process control portion 21 and the communication control portion 22 by executing programs stored in a RAM, a ROM, or the like embedded in the cell-phone 2. The electronic money information storage 23 is embedded in the IC chip of the IC tag 3.

The process control portion 21 controls overall of the cell-phone 2. Concretely, the process control portion 21 executes an update process for electronic money information A to C stored in the electronic money information storage 23 based on information including the obtained settlement value of the merchandise via the communication control portion 22.

The communication control portion 22 communication-controls with the POS device 4 with the use of the antenna embedded in the IC tag 3. Concretely, the communication control portion 22 sends information related to electronic money information A to C stored in the electronic money information storage 23 to the POS device 4 and receives information including settlement value of the merchandise which is sent from the POS device 4.

The electronic money information (in the embodiment, three electronic money information of the electronic money information A to C), access keys, or the like are stored in the electronic money information storage 23. The electronic money information is used by the electronic money settlement devices embedded in the cell-phone 2. The access keys are used when the electronic money information is authenticated. Each of the electronic money information A to C includes a type of the electronic money information and information related to balance of the available electronic money information. The balance of the electronic money will be decreased when the settlement for the item is made. Here, the decreased value corresponds to the settlement value. Also, the balance of the electronic money will be increased when the user charges. Here, the increased value corresponds to the charged value.

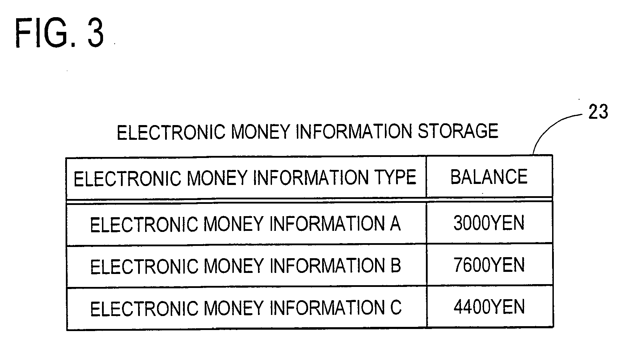

As shown in Figure 3, types of the electronic money information and balances of the electronic money are stored in the electronic money information storage 23 of the embodiment, as three kinds of the electronic money information A to C. For example, the balance of the electronic money information A shown in Figure 3 is 3000 YEN, and the electronic money settlement device of the electronic money information A is available within 3000 YEN.

Returning to Figure 2, the POS device 4 making up the electronic money settlement system 1 will be described. As shown in Figure 2, the POS device 4 includes a process control portion 41, a communication control portion 42, an electronic money information storage 43, a discount value calculation portion 44, a payment selection portion 45, a balance calculation portion 46, a data input portion 47, a data output portion 48, or the like. A central processing unit (CPU) embedded in the POS device 4 may function as the process control portion 41, the communication control portion 42, the discount value calculation portion 44, the payment selection portion 45, and the balance calculation portion 46 by executing programs stored in a RAM, a ROM, or the like embedded in the POS device 4. The electronic money information storage 43 is embedded in the RAM of the POS device 4. The data input portion 47 may or may not be a keyboard, a barcode reader, or the like embedded in the POS device 4. The data output portion 48 may or may not be a liquid crystal display embedded in the POS device 4.

The process control portion 41 controls overall of the POS device 4. Concretely, the POS device 4 selects one electronic money settlement device, and calculates the balance of the electronic money information by controlling each of portions 44 to 46. The selected electronic money settlement device will pay based on the electronic money information obtained via the communication control portion 42 and the information of the item obtained from the settlement information DB 5. The process control 41 calculates the settlement value based on the barcode information which is input from the data input portion 47, and outputs calculated settlement value to the data output portion 48.

The communication control portion 42 communication-controls with the cell-phone 2. Concretely, the communication control portion 42 receives information related to electronic money information A to C stored in the electronic money information storage 23 from the cell-phone 2, and sends information including settlement value of the merchandise to the cell-phone 2.

Information related to the electronic money balance of the electronic money information corresponding to authenticated access key among plural electronic money information (in the embodiment, three electronic money information A to C) included in the cell-phone 2 is stored in the electronic money information storage 43.

The discount value calculation portion 44 calculates discounted settlement value of the item every the authenticated electronic money information. Concretely, the discounted value calculation portion 44 calculates discounted settlement value every authenticated electronic money information based on the barcode information of item which is input from the data input portion 47 and item value and discount rate stored in the value storage 51 and discount rate storage 52.

The payment selection portion 45 selects the electronic money information to be used to make the payment among authenticated electronic money information. Concretely, the payment selection portion 45 compares the discounted settlement value calculated by the discount value calculation portion 44 every the electronic money information, and selects the electronic money settlement device corresponding to the cheapest discounted settlement value. The selected electronic money settlement device will be used to make the settlement.

The balance calculation portion 46 calculates the electronic money balance of the electronic money information after the payment is made. Concretely, the balance calculation portion 46 subtracts the discounted settlement value calculated by the discount value calculation portion 44 from the electronic money balance (before the settlement) of the electronic money information selected by the payment selection portion 45. Here, the subtracted value is the electronic money balance after the settlement.

The settlement information DB 5 making up the electronic money settlement system 1 will be described. As shown in Figure 2, the POS device 4 includes a value storage portion 51 and discount rate storage 52. The value storage 51 and the discount rate storage 52 are arranged on the HDD embedded in the settlement information DB 5.

Information of the items located in the shop where the POS device 4 is arranged, is stored in the value storage portion 51. As shown in Figure 4, item ID which identifies the item, the item name, and the item value are stored in the value storage portion 51 of the embodiment respectively, as information of the item located in the shop. If the barcode reader embedded in the POS device 4 reads the item ID from the item, the item name and the value will be identified. For example, if the item ID is "4901777119314", it is identified that the item name is "Green Tea" and the value is "140 YEN".

Discount information of each of the electronic money settlement devices using each of electronic money information A to C is stored in the discount rate storage 52. As shown in Figure 5, item ID, the item name, the type of electronic money information, and discount rate corresponding to the electronic money information are stored in the discount rate storage 52 of the embodiment every item located in the shop. When the barcode reader embedded in the POS device 4 reads the item ID from the item, discount rate of the item is determined every the electronic money information. For example, if the item ID is "4901777119314", it is determined that the item name is "Green Tea", the discount rate of the electronic money information A is "5%," the discount rate of the electronic money information B is "10%", and the electronic money information C is "3%".

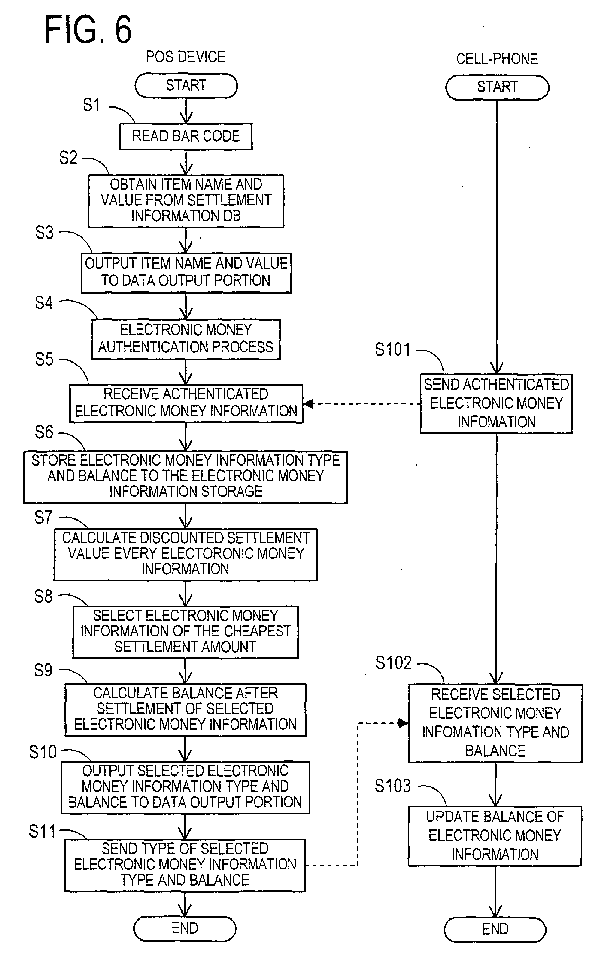

An electronic money settlement program will be described with Figure 6. The electronic money settlement program is executed by the cell-phone 2 and the POS device 4 of the electronic money settlement system 1. By executing the electronic money settlement program, when the settlement of the item is made by the plural electronic money settlement devices embedded in the cell-phone2, the electronic money device corresponding to the cheapest discounted settlement value is automatically selected and the selected electronic money device will make the settlement of the item.

An electronic money settlement process program executed in the CPU of the POS device 4 will be described with reference to Figure 6.

In the electronic money settlement process program, in S1, the CPU of POS device 4 reads the barcode of the item to be bought by the user with the use of the data input portion 47 (for example, the barcode reader), and detects a item ID.

In S2, the CPU obtains the item name and value corresponding to the item ID detected based on the barcode information which is read in S1, from the value storage portion 51 (see Figure 4)of the settlement information DB 5.

In S3, the CPU outputs the item name and the value obtained in S2 to the data output portion 48 (for example, the liquid crystal display). Thereby, the user and a clerk can easily understand the item to be bought and value thereof.

In S4, the CPU executes an authentication process for the each of the electronic money settlement device embedded in the cell-phone 2 with the use of the access keys stored in the RAM and the ROM. Thereby, the type of the electronic money settlement device embedded in the cell-phone 2 will be identified. Concretely, the access keys corresponding to each of the electronic settlement device embedded in the cell-phone 2 are compared with the access keys corresponding to each of the electronic money information A to C stored in the IC tag 3, and the electronic money settlement device embedded in the cell-phone 2 and the type of the electronic money information are identified based on authenticated access key. Here, in authentication with the access key, plural electronic money information embedded in the cell-phone 2 can be made at one time, or in sequence.

In S5, the electronic money information which is sent from the cell-phone 2 is received. Here, the electronic money information which is sent from the cell-phone 2 was authenticated in S4 and the type thereof was identified, and includes the type of the electronic money information and the balance.

In S6, the CPU stores the type of the electronic money information and the balance received in S5 in the electronic money information storage 43.

In S7, the CPU obtains discount rate of the item to be bought by the user from the discount rate storage 52 (see Figure 5) based on the item ID detected in S1 and stored in S6 and the electronic money information received in S5, and then calculates each of the discounted settlement value of electronic money information. For example, in a case where the user buys "Green Tea" shown in Figures 4 and 5 with the use of any of the electronic money information A to C, the CPU calculates "133 YEN" in the electronic money information A, "126 YEN" in the electronic money information B, and "136 YEN" in the electronic money information C.

In S8, the CPU compares the discounted settlement value calculated in S7 and selects the cheapest electronic money information. For example, in a case where the user buys "Green Tea" shown in Figures 4 and 5 with the use of any of the electronic money information A to C, the electronic money information B of the cheapest settlement money "126 YEN" will be selected.

In S9, the CPU calculates the electronic money balance after the item is bought with the use of the electronic money information selected in S8. Concretely, the discounted settlement value is subtracted from the electronic money balance received in S5, and the subtracted value is the electronic money balance after the settlement.

In S10, the CPU outputs the type of the electronic money information selected in S8 and the electronic money balance after the settlement calculated in S9, to the data output portion 48 making up the liquid crystal display or the like. Thereby, the user and the clerk can easily understand the type of the electronic money settlement device and the settlement value.

In S11, the CPU sends the type of the electronic money information which is selected in S8 and the electronic money balance which is calculated after the settlement in S9, to the cell-phone 2. Thereby, the cell-phone 2 updates the electronic money information storage 23 (which will be described later) and the settlement process is finished.

The electronic money settlement program executed by the cell-phone 2 will be described with reference to Figure 6.

In the electronic money settlement program, at first, in S101, the cell-phone 2 sends the electronic money information to the POS device 4. Here, the electronic money information is the authenticated electronic money information in S4 by the POS device 4, and includes the type of the electronic money information and the balance.

In S102, the CPU receives the type of the electronic money information to be made for the settlement sent from the POS device 4 in S11 and the electronic money balance after the settlement. And then, in S103, the electronic money to be made for the settlement among a plurality of electronic money information stored in the electronic money information storage 23 in S103 is updated to the electronic money balance after the settlement received in S102. Thereby, the settlement of the electronic money is completed.

As mentioned above, in the electronic money settlement system 1 and the electronic money settlement method, the POS deice 4 reads the barcode of the item to be bought (S1), and identifies plural electronic money settlement devices embedded in the cell-phone 2 (S4). Discounted settlement values of the identified plural electronic money settlement devices are compared, and the electronic money settlement device of the cheapest discounted settlement value (S8) is selected, the settlement is made by the selected electronic money settlement device (S103). Thereby, the electronic money settlement device to be made for the settlement among plural electronic money settlement devices (including Edy (registered trade mark in Japan), Suica (registered trademark in Japan), or the like) is automatically selected without a comparison by the user. Thereby, the settlement is quickly made with the cheapest settlement value.

The POS device 4 authenticates the access key, and identifies plural electronic money settlement device based on the authenticated electronic money information (S4). Thereby, the electronic money settlement is made with high-security based on the access key.

Also, the electronic money settlement device is embedded in the cell-phone. Thereby, the user needs not carry IC card or the like, and can make the settlement with the use of the cell-phone.

The invention may be embodied in other specific forms without departing from the spirit or essential characteristics thereof.

For example, discounted settlement values of the electronic money settlement device may be displayed on the liquid crystal display, and the user can select the electronic money settlement device to be made for the settlement, in place of that discounted settlement values are compared and the electronic money device of the cheapest settlement value and the selected electronic money settlement device.

In the embodiment, plural electronic money settlement devices are embedded in the cell-phone 2, however, plural electronic money settlement deices may be embedded in on IC card having the IC tag. Further, plural electronic money settlement deices may be embedded in a PDA (Personal Digital Assistants), a portable audio player, or the like.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. An electronic money settlement method comprising:
a settlement value obtaining step that obtains a settlement value;
a settlement device identifying step that identifies plural electronic money settlement devices (2);
a value comparing step that compares discounted settlement values corresponding to the identified electronic money settlement device (2) based on discount information in each of which a discount rate of the settlement value corresponds to the electronic money settlement device (2);
a settlement device selecting step that selects a specific electronic money settlement device (2) corresponding to the cheapest discounted settlement value based on a result of the value comparing step; and
a making payment step that makes a settlement of the cheapest discounted settlement value with the use of the selected electronic money settlement device (2).

2. The electronic money settlement method according to claim 1, wherein each of the electronic money settlement devices (2) makes the settlement with the use of different electronic money information.

3. The electronic money settlement method according to claim 2,
wherein each of the electronic money information has an access key,
wherein the settlement device identifying step further comprises an authenticating step that authenticates the access keys and identifies the plural electronic money settlement devices (2) based on the authenticated electronic money information.

4. The electronic money settlement method according to claim 1, wherein the plural electronic money settlement devices (2) are embedded in a portable terminal (2).

5. An electronic money settlement system comprising:
plural electronic money settlement devices (2), each of the electronic money settlement devices (2) storing electronic money information; and
a settlement terminal device (4,5) that makes a settlement for an item by reading the electronic money information stored in the electronic money settlement device,
wherein the settlement terminal device (4,5) further comprises:
a settlement value obtaining device (4) that obtains a settlement value;
a settlement device identifying device (4) that identifies plural electronic money settlement devices (2);
an information storage device (52) that stores discount information in each of which a discount rate of the settlement value corresponds to the electronic money settlement device (2);
a value comparing device (4) that compares discounted settlement values corresponding to the identified electronic money settlement device (2) based on the discount information;
a settlement device selecting device (4) that selects a specific electronic money settlement device corresponding to the cheapest discounted settlement value based on a result of the value comparing device (4); and
a making settlement device (4) that makes a settlement of the cheapest discounted settlement value with the use of the selected electronic money settlement device.

6. The electronic money settlement system (1) according to claim 5, wherein each of the electronic money settlement devices (2) makes the settlement with the use of different electronic money information.

7. The electronic money settlement system according to claim 6,
wherein each of the electronic money information has an access key,
wherein the electronic device identifying device (4) further comprises an authenticating device that authenticates the access keys and identifies the plural electronic money settlement devices (2) based on the authenticated electronic money information.

8. The electronic money settlement system according to claim 5, wherein the plural electronic money settlement devices (2) are embedded in a portable terminal (2).

9. An electronic money settlement terminal device (4,5) comprising:
a processor programmed to:
(a) obtain a settlement value;
(b) identify plural electronic money settlement devices (2);
(c) compare discounted settlement values corresponding to the identified electronic money settlement device (2) ;
(d) select a specific electronic money settlement device (2) corresponding to the cheapest discounted settlement value based on a comparison result; and
(e) make a settlement of the cheapest discounted settlement value with the use of the selected electronic money settlement device.

10. The electronic money settlement terminal device (4,5) according to claim 9, wherein each of the electronic money settlement devices (2) makes the settlement with the use of different electronic money information.

11. The electronic money settlement terminal device (4,5) according to claim 10,
wherein each of the electronic money information has an access key,
wherein the processor further programmed to:
authenticate the access keys, and
identify the plural electronic money devices (2) based on the authenticated electronic money information.

12. The electronic money settlement terminal (4,5) according to claim 9, wherein the plural electronic money settlement devices (2) are embedded in a portable terminal (2).

13. A tangible computer-executable medium having instructions stored thereon that, when executed by a processor, perform a method comprising the steps of:
a settlement value obtaining step that obtains a settlement value;
a settlement device identifying step that identifies plural electronic money settlement devices (2);
a value comparing step that compares discounted settlement values corresponds to the identified electronic money settlement device (2) based on discount information in each of which a discount rate of the settlement value corresponds to the electronic money settlement device (2);
a settlement device selecting step that selects a specific electronic money settlement device (2) corresponding to the cheapest discounted settlement value based on a result of the value comparing step; and
a making payment step that makes a settlement of the cheapest discounted settlement value with the use of the selected electronic money settlement device (2).

14. The tangible computer-executable medium according to claim 13, wherein each of the electronic money settlement devices (2) makes the settlement with the use of different electronic money information.

15. The tangible computer-executable medium according to claim 14,
wherein each of the electronic money information has an access key,
wherein the settlement device identifying step further comprises an authenticating step that authenticates the access keys and identifies the plural electronic money settlement devices (2) based on the authenticated electronic money information.

16. The tangible computer-executable medium according to claim 13, wherein the plural electronic money settlement devices (2) are embedded in a portable terminal (2).
